(19) Europäisches Patentamt

European Patent Office

Office européen des brevets

(11) **EP 0 642 440 B1**

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(21) Anmeldenummer: **94910313.9**

(22) Anmeldetag: **30.03.1994**

(51) Int. Cl.$^6$: **B64C 5/08**, B64C 23/06

(86) Internationale Anmeldenummer:
**PCT/CH94/00067**

(87) Internationale Veröffentlichungsnummer:
**WO 94/22713 (13.10.1994 Gazette 1994/23)**

(54) **FLÜGEL MIT FLÜGELGITTER ALS ENDABSCHNITT**

WING WITH A WING GRID AS THE END SECTION

AILE COMPORTANT UNE GRILLE COMME SECTION TERMINALE

(84) Benannte Vertragsstaaten:
**AT BE CH DE DK ES FR GB GR IE IT LI LU MC NL PT SE**

(30) Priorität: **05.04.1993 CH 1032/93**
**02.11.1993 CH 3293/93**

(43) Veröffentlichungstag der Anmeldung:
**15.03.1995 Patentblatt 1995/11**

(73) Patentinhaber: **LA ROCHE, Ulrich**
**CH-8053 Zürich (CH)**

(72) Erfinder: **LA ROCHE, Ulrich**
**CH-8053 Zürich (CH)**

(74) Vertreter: **Frei, Alexandra Sarah**
**Frei Patentanwaltsbüro**
**Hedwigsteig 6**
**Postfach 768**
**8029 Zürich (CH)**

(56) Entgegenhaltungen:
**FR-A- 2 349 494**      **GB-A- 196 410**
**GB-A- 846 322**        **US-A- 1 466 551**
**US-A- 4 671 473**

## Beschreibung

Die Erfindung betrifft einen Flügel, dessen Hauptteil eine umströmte Oberfläche aufweist.

Es ist bekannt, daß ein solcher Flügel am Ende des Hauptteils ein Flügelgitter als Endabschnitt aufweisen kann. Beim Flügel kann es sich z.B. um den Flügel eines Flugkörpers oder eines Propellers, um das Segel oder Schwert eines Bootes usw. handeln.

Flügel zu bauen ist immer ein Kompromiss zwischen der Festigkeit, die ein kleines Seitenverhältnis bevorzugt und dem induzierten Widerstand, der ein grosses Seitenverhältnis des Flügels erfordert und zusammen mit dem Profilwiderstand die Gleitzahl bestimmt.

Aus theoretischen Überlegungen wäre es wunschbar, einen Teil der Energie, die im seitlichen Wirbel am freien Flügelende dem Strömungsmedium abgegeben wird und den induzierten Widerstand bestimmt, zu rekuperieren oder deren Abgabe ganz zu vermeiden.

## Stand der Technik

Erstmals hat A. Thurston (US-1466551) 1921 eine Vorrichtung mit einem Flügelgitter am Ende einer Tragfläche als Mittel zur Auftriebsvermehrung und -steuerung offenbart. Neben divergenten und konvergenten Konfigurationen von Flügelchen gleichbleibender Sehnenlänge zeigt er eine Konfiguration, in der diese Flügelchen parallel angeordnet und auf einem einziehbaren Wagen montiert sind. Die Flügelchen des hinteren Bereiches sind gegen oben gestaffelt und im vorderen Teil nach unten gestaffelt beschrieben. Die Anordnung dient der Veränderung des Zusatzauftriebes an der Flügelspitze zu Zwecken der Flugzeugsteuerung.

Auch in der Publikation GB-196410 (1923) ist ein paralleles Flügelgitter am Ende eines Flügels beschrieben, mit welchem Flügelgitter zur Verbesserung des Wirkungsgrades, das heisst des Verhältnisses von Auftrieb zu Widerstand, die aufwärtsgerichtete Komponenten der wirbelförmigen Umströmung des Flügelendes (gedacht ohne Flügelgitter) durch die Flügelchen zur Erzeugung von Vortrieb ausgenutzt wird. Dazu haben die Flügelchen eine nach unten gerichtete Anstellung.

Die Publikation GB-846322 (1951) zeigt eine Vorrichtung bestehend aus parallelen, hohlen Rohrprofilen versehen auf ihrer Länge mit Düsenschlitzen, die mit einem Endrahmen verbunden sind und entlang der Längsachse des Profils des Hauptflügels angeordnet sind. Die Vorrichtung wird zwecks Erzeugung von zusätzlichem Auftrieb für bestimmte Flugmanöver aus dem Hauptflügel ausgefahren, welcher zusätzliche Auftrieb erzeugt wird durch die Umströmung der rohrförmigen Profile und durch das Ausblasen aus den Düsenschlitzen.

Spillmann (US-4272043) zeigt ein Flügelgitter mit Flügelchen, die konsequent von hinten nach vorne gestaffelt sind, das heisst jeweils das vordere ist höher angebracht als das hintere. Die Flügelchen ragen radial aus einem Endabschluss des Hauptflügels heraus. Zweck der Anordnung ist eine Verminderung der Verwirbelung am Flügelende und dadurch eine Verkleinerung des Strömungswiderstandes.

Die Publikation von P. Proctor, Seattle ("Winglet Design to Cut Fuel Burn", Aviation Week & Space Technology, Dec. 6, 1993, Seite 49) zeigt eine Vorrichtung mit mehreren Flügelchen, die die örtliche Profilzirkulation des Hauptflügels übernehmen und an ihrer Spitze wieder abgeben. Dazu sind die Flügelchen, die nicht parallel angeordnet sind, paarweise mit einer spiralförmigen Schlaufe verbunden. Zweck der Vorrichtung ist eine Reduktion des induzierten Widerstandes.

## Die Erfindung

Die erfindungsgemäss zu lösende Aufgabe besteht darin, das Flügelende eines tiefen und kurzen Flügels mit kleinem Seitenverhältnis so zu gestalten oder zu ergänzen, dass damit Gleitzahlen erreicht werden, die sonst nur mit viel schlankeren Flügeln mit grossem Seitenverhältnis zu erreichen sind, oder die Gleitzahlen eines vorhandenen Flügels durch Verringerung des induzierten Widerstandes zu verkleinern.

Diese Aufgabe wird gelöst durch den erfindungsgemässen Flügel mit Flügelgitter, wie er vollumfänglich als Erfindung im Patentanspruch 1 definiert ist.

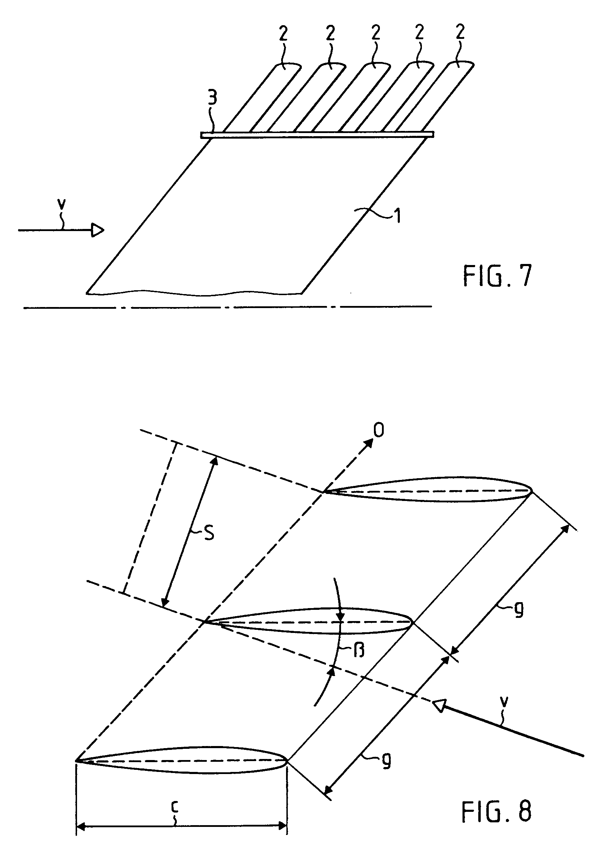

Gemäss Erfindung wird die äusserste Teilspanne des Flügels durch ein Flügelgitter aus mindestens zwei parallel gestaffelten Flügelchen ersetzt. Dieses Flügelgitter übernimmt an derjenigen Stelle, an der der Flügelhauptteil in das angesetzte Flügelgitter übergeht, die Zirkulation um den Flügelhauptteil voll (das heisst der Gesamtauftrieb pro Längeneinheit der Spannweite ist an dieser Stelle für den Hauptteil des Flügels und für das Flügelgitter gleich) und abschnittweise, dadurch dass die Flügelchen in einer Staffelungsrichtung gestaffelt sind und im Auslegepunkt einen positiven Anstellungswinkel haben (siehe Figur 8). Ausgegangen wird dabei als Obergrenze von der Zirkulation um das Flügelprofil ohne Flügelendwirbel, der ja durch die Flügelendwirbel des Flügelgitters ersetzt wird. Die Flügelchen des erfindungsgemässen Flügels sind vorzugsweise verwindungsfrei und ihr Anstellungswinkel vorzugsweise gemeinsam oder auch einzeln verstellbar.

Diese erfindungsgemässe Lösung der gestellten Aufgabe geht einen wesentlichen Schritt weiter als die bekannten

2

Lösungen, bei denen durch individuell angepasste Winglets der Flügelendwirbel ausgenutzt wird und sie vermeidet die unvollständige Nutzung des Effektes gemäss bekannten Lösungen mit mehreren, gespreizten oder parallelen Flügelchen.

Gegenüber der näherliegenden Lösung mit einem regelmässigen Flügelgitter mit mindestens drei Flügelchen kommen in der bevorzugten Ausführungsform nur mindestens zwei Flügelchen zur Anwendung, die nur noch parallel gestaffelt sein müssen. Die Wirkung des erfindungsgemässen Flügels könnte mit einem bekannten Spreizflügel höchstens erreicht werden, wenn die Profile und Anstellwinkel der Spaltflügel über ihre Länge an einen gegebenen Spreizungsgrad angepasst werden könnten. Auch die im Bereich der bekannten Spreizflügelenden maximal grosse Gitterteilung, die sich negativ auswirkt, wird mit der parallelen Staffelung der Flügelchen gemäss Erfindung vermieden.

Das Flügelgitter des erfindungsgemässen Flügels mit seinen parallel gestaffelten, mindestens zwei Flügelchen kann bei Änderungen des Anstellwinkels gegenüber der Anströmung v als Ganzes nachgeführt werden, ohne dass die Gitterparameter verändert werden müssten, und ist, besonders wenn nicht überlappend, ohne Nachführung für einen grossen Bereich des Anstellwinkels wirksam. Demgegenüber verändert bspw. eine Luftwaffel, die eine Gesamttragfläche aus vielen Einzelflügeln darstellt, bei ihrer Verstellung den Mehrdeckereffekt und die überlappenden Flügelchen führen zu einem engen Bereich des für eine Einstellung jeweils nutzbaren Anstellwinkels der Anordnung. Auch kann mit einer derartigen Flugwaffel im Gegensatz zum erfindungsgemässen Flügel für einen Flügel mit kleinem Seitenverhältnis eine kleinere Gleitzahl nicht erreicht werden. Das bekannte, überlappende Flügelgitter über der ganzen Spannweite, das eigentlich einen reinen Mehrdecker mit kleiner Staffelung darstellt, ergibt praktisch keinen Mehrdeckereffekt für den induzierten Widerstand, wohl aber eine beträchtliche Vergrösserung des Profilwiderstandes. Die gitterartig aufgelösten Flügel mit varierender Länge der Einzelflügel weisen diesen Nachteil ebenfalls auf, weil die Einzelflügel sich ebenfalls über die ganze Spannweite erstrecken. Gegenüber einem Flügel mit den bekannten Spiralschleifen zur Ableitung der örtlichen Profilzirkulation hat der erfindungsgemässe Flügel mit einer ebenen und daher weniger seitenwindempfindlichen und konstruktiv einfacheren Anordnung dieselbe Wirkung.

Werden die mindestens zwei Flügelchen des erfindungsgemässen Flügels mit Hilfe eines Halterahmens verbunden, wird die Wirkung eines Flügelgitters aus sehr vielen Flügelchen ohne Halterahmen angenähert und ein Flügelgitter aus mindestens drei Flügelchen um einen wirksamen Bereich ergänzt und erweitert.

Da nur die Staffelung der Flügelchen der erfindungsgemässen Flügels parallel sein muss, die anderen Gitterparameter aber der abzuführenden Zirkulationsverteilung über die Profilsehne des Hauptteils angepasst werden können, ist eine weitere Optimierung der Anpassung an die Verhältnisse des Hauptteiles möglich.

Im Detail werden nachfolgend beispielsweise Ausführungsformen des erfindungsgemässen Flügels beschrieben, wobei auf die folgenden Figuren Bezug genommen wird. Diese zeigen:

Fig.1    die klassische Kräfteaufteilung in Auftrieb und Widerstand am angeströmten Flügelprofil zur Definition der Gleitzahl;

Fig.2    das Grundschema des erfindungsgemässen Flügels mit einem an den konventionellen Hauptteil als tragender Abschnitt angefügten Flügelgitter gleichen spezifischen Auftriebs pro Längeneinheit der Spannweite an der Anfügestelle zum Hauptteil;

Fig.3    eine beispielhafte Ausführungsform des Flügelgitters mit Halterahmen;

Fig.4    ein Flügelgitter, das aus dem Hauptteil ausfahrbar ist;

Fig.5    eine Anwendung des erfindungsgemässen Flügels am Hauptsegel eines Segelboots;

Fig.6    eine Anwendung des erfindungsgemässen Flügels an einem Flugzeug;

Fig.7    eine Pfeilung des Flügelgitters zur Strömungsrichtung, wie sie hohe Unterschallgeschwindigkeiten erfordern;

Fig.8    die Bezeichnungen der Gitterparameter eines allgemeinen Flügelgitters in einer senkrechten Schnittdarstellung.

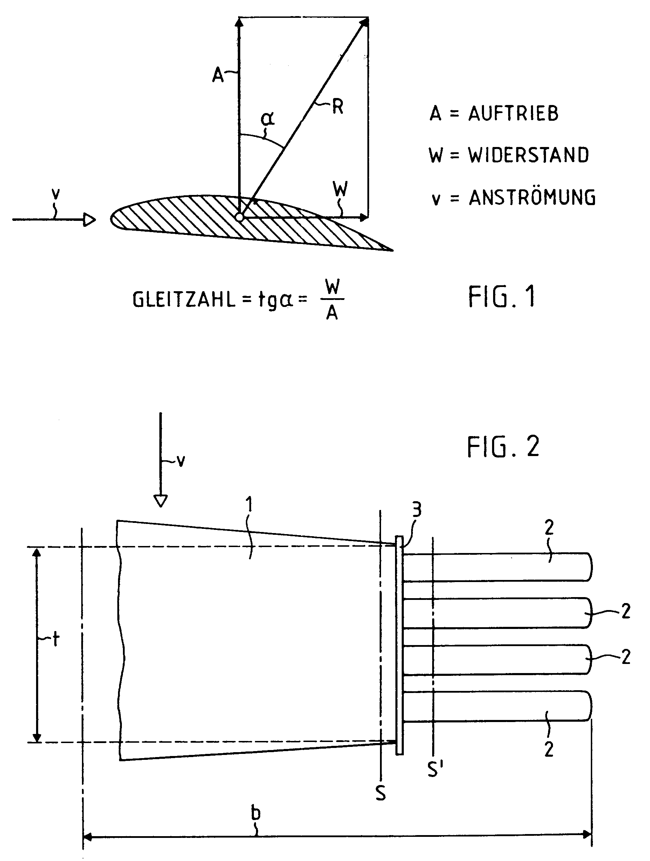

Fig. 1 zeigt die Anströmung v eines Flügelprofils mit endlicher Spannweite, wobei ein Auftrieb A und ein Widerstand W entstehen. Das Verhältnis dieser Kräfte gibt die Gleitzahl nach der Formel:

$$\text{Gleitzahl} = tg(\alpha) = W/A$$

wobei:

$$W = Wi + Wr = \text{induzierter Widerstand} + \text{Reibungswiderstand}$$

Mit dem erfindungsgemässen Flügel wird der Anteil **Wi**, der durch Umströmung der Flügelenden verursachte, induzierte Widerstand verringert.

Fig. 2 zeigt einen Flügel mit einem Hauptteil 1, der an der Symmetrieebene in der Mitte beginnt. An den Hauptteil 1 ist ein Teilabschnitt der totalen tragenden Flügelspannweite b mit einem Flügelgitter bestehend aus Flügelchen 2 ähnlicher Ausrichtung und paralleler Staffelung angefügt. Die Flügelchen 2 sind über die Profilsehne t angeordnet.

Die gewünschte Wirkung für den Auslegungspunkt wird erreicht, wenn die Zirkulation in den Profilschnitten S und S' von gleicher Grösse und ähnlicher Drehte ist und wenn die Flügelchen ein Flügelgitter bilden, das abschnittweise entlang der Profilsehne des Hauptteiles die Zirkulation übernimmt. Die Anfügestelle des Flügelgitters ist, wie gezeigt, als Trennwand 3 ausgebildet.

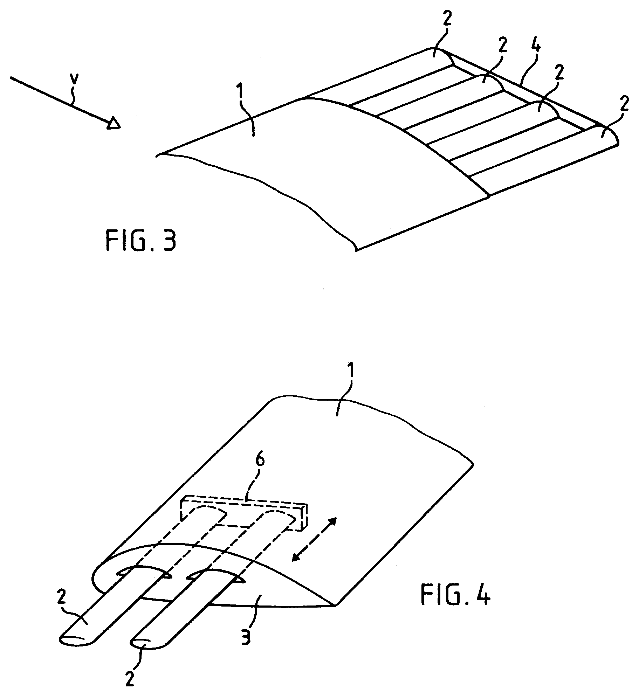

Fig. 3 zeigt eine beispielhafte Ausführungsform des erfindungsgemässen Flügels, bei der die äusseren Enden der Flügelchen 2 in einem Halterahmen 4 gehalten sind. Der Halterahmen hat dabei für den Strömungsverlauf die Funktion einer Abschlussfläche.

Fig. 4 zeigt eine beispielhafte Ausführungsform des erfindungsgemässen Flügels mit einem ausfahrbaren Flügelgitter, dessen Flügelchen an einer Platte 6 befestigt sind und als ganze Gruppe bewegt werden. Es sind auch Ausführungsformen denkbar mit einzeln ausfahrbaren Flügelchen.

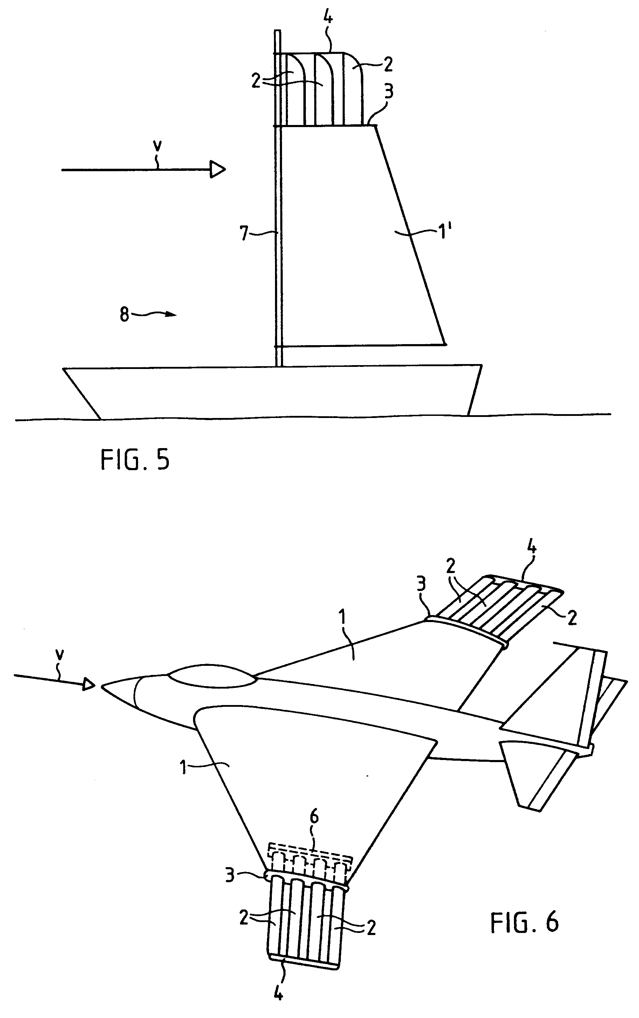

Fig. 5 zeigt als Anwendung des erfindungsgemässen Flügels ein Segelboot 8 mit einem Mast 7 und einem Hauptsegel 1, dessen Oberkante mit einem Flügelgitter (2, 4) versehen ist.

Fig. 6 zeigt eine beispielhafte Ausführungsform des erfindungsgemässen Flügels mit Flügelgitter bestehend aus Flügelchen 2, Trennwand 3 und Halterahmen 4, wobei die Flügelchen als Gruppe mit Platte 6 aus dem Hauptteil 1 eines dreieckförmigen Flugzeugflügels ausfahrbar sind.

Fig. 7 zeigt die Anwendung eines gepfeilten Flügelgitters, wie es beispielsweise für hohe Unterschallgeschwindigkeiten verwendet wird. Je nach Ausführung der Flügelchen 2 ist dabei abhängig von Anstellwinkel und Profildicke der Flügelchen die resultierende, für die gleiche Machzahl ausgelegte Pfeilung verschieden von der Pfeilung des Hauptflügelteils 1.

Fig. 8 zeigt die Gitterparameter eines Flügelgitters für einen erfindungsgemässen Flügel. v stellt die Anströmungsrichtung des Flügels mit Flügelgitter im Auslegepunkt des Flügels dar. Die eine Staffelungsrichtung O des Flügelgitters relativ zur Anströmungsrichtung v kann prinzipiell beliebig gewählt werden, verläuft aber vorzugsweise, wie in der Figur dargestellt, von hinten unten nach vorne oben. Ausschlaggebend für die Wirkung ist der Anstellwinkel β bezogen auf die Profilsehnen der Flügelchen (oder genauer auf die Nullanströmungsrichtung der Flügelchen), der, wie in der Figur gezeigt, positiv sein muss. Ferner ausschlaggebend sind die Staffelung s quer zur Anströmungsrichtung v, die für gestaffelte Flügelchen nicht Null sein darf, und die Länge der Profilsehnen c. Die Grösse g ist die Gitterteilung in der mit O bezeichneten Staffelungsrichtung.

## Patentansprüche

1. Flügel mit einem Hauptteil (1), der eine geschlossen umströmte Oberfläche und an seinem von der Befestigungsseite entferntesten Ende eine Profilsehne (t) einer bestimmten Länge und eine parallel zu dieser Profilsehne angeordnete Wand (3) aufweist, und mit einem Flügelgitter, das am genannten Ende des Hauptteiles angefügt ist und aus mindestens zwei parallelen Fügelchen (2) besteht, wobei die Flügelchen (2) im wesentlichen die gleiche Ausrichtung haben wie der Hauptteil (1), **dadurch gekennzeichnet**, dass die Flügelchen (2) des Flügelgitters in einer Staffelungsrichtung (O) gestaffelt derart angeordnet und ausgestaltet sind, dass durch entsprechende Bestimmung des Gesamtauftriebs des Flügelgitters pro Längeneinheit der Spannweite (b) im Auslegungspunkt die Zirkulation um das Flügelgitter gleich ist wie die Zirkulation um das Profil des Hauptteils (1) an der Anfügestelle des Flügelgitters und derart, dass diese Zirkulation entlang der Profilsehne (t) abschnittweise von den Flügelchen übernehmbar ist.

2. Flügel nach Anspruch 1, **dadurch gekennzeichnet**, dass die Flügelchen (2) verwindungsfrei sind.

3. Flügel nach Anspruch 2, **dadurch gekennzeichnet**, dass das Flügelgitter als Ganzes oder einzelne Flügelchen aus dem Hauptteil (1) ausfahrbar ist bzw. sind.

4. Flügel nach einem der Ansprüche 2 bis 3, **dadurch gekennzeichnet**, dass das Flügelgitter einen Halterahmen (4) aufweist, durch den die Flügelchen (2) an ihren freien Enden miteinander verbunden sind.

5. Flügel nach einem der Ansprüche 2 bis 4, **dadurch gekennzeichnet**, dass das Flügelgitter im Auslegungspunkt festgelegte, pro Flügelchen einzeln bestimmte Gitterparameter, wenigstens für Profilsehne (c), Anstellwinkel (β) und Staffelungsdistanz (s) aufweist.

**6.** Flügel nach einem der Ansprüche 2 bis 5, **dadurch gekennzeichnet**, dass der Anstellwinkel (β) der Flügelchen (2) im Flügelgitter ausgehend vom Auslegungspunkt gemeinsam um gleiche Beträge veränderbar ist.

**7.** Flügel nach einem der Ansprüche 2 bis 6, **dadurch gekennzeichnet**, dass durch Drehung des Flügelgitters als Ganzes der Anstellwinkel der Flügelchen veränderbar ist.

**8.** Flügel nach einem der Ansprüche 2 bis 7, **dadurch gekennzeichnet**, dass die Flügelchen eine der gleichen Machzahl entsprechende Pfeilung zur Anströmung (v) haben wie der Hauptteil (1).

**9.** Flügel nach einem der Ansprüche 2 bis 8, **dadurch gekennzeichnet**, dass das vorderste, resp. das hinterste Flügelchen im Flügelgitter einzeln verstellt werden kann.

**10.** Verwendung des Flügels nach einem der Ansprüche 1 bis 9 für ein Segelwerk eines Bootes mit einem Hauptsegel (1), dessen Oberkante mit einem Segelgitter versehen ist.

## Claims

**1.** Wing with a main part (1), which has a closed surface round which there is a flow and at its end remote from the fixing side a profile chord (t) having a specific length and a wall (3) positioned parallel to said profile chord, and having a wing grid, which is attached to said end of the main part and comprises at least two parallel winglets (2), the winglets (2) having substantially the same orientation as the main part (1), characterized in that the winglets (2) of the wing grid are staggered in a staggering direction (O) in such a way that by a corresponding determination of the total lift of the wing grid per length unit of the span width (b) in the design point, the circulation round the wing grid is the same as the circulation round the profile of the main part (1) at the joining point of the wing grid and in such a way that said circulation along the profile chord (t) can be zonally taken over by the winglets.

**2.** Wing according to claim 1, characterized in that the winglets (2) are distortion-free.

**3.** Wing according to claim 2, characterized in that the wing grid as a whole or individual winglets can be extended from the main part (1).

**4.** Wing according to one of the claims 2 and 3, characterized in that the wing grid has a holding frame (4) through which the winglets (2) are interconnected at their free ends.

**5.** Wing according to one of the claims 2 to 4, characterized in that the wing grid at the design point has fixed grid parameters individually defined for each winglet, at least for the profile chord (c), setting angle (β) and stagger distance (s).

**6.** Wing according to one of the claims 2 to 5, characterized in that the setting angle (β) of the winglets (2) in the wing grid is jointly variable by identical amounts starting from the design point.

**7.** Wing according to one of the claims 2 to 6, characterized in that through the rotation of the complete wing grid the setting angle of the winglets can be modified.

**8.** Wing according to one of the claims 2 to 7, characterized in that the winglets have a sweepback to the incident flow (v) like the main part (1) corresponding to the same Mach number.

**9.** Wing according to one of the claims 2 to 8, characterized in that the furthest forward or furthest back winglet in the wing grid can be individually adjusted.

**10.** Use of the wing according to one of the claims 1 to 9 for a boat having a main sail (1), whose upper edge is provided with a sail grid.

## Revendications

**1.** Aile comportant une partie principale (1) qui présente une surface fermée, entourée d'un courant, et sur son extrémité la plus éloignée de son côté de fixation, une corde profilée (t) d'une longueur déterminée et une paroi (3) disposée parallèlement à ladite corde profilée, et comportant une grille d'aile qui est fixée à l'extrémité mentionnée de la partie principale, et constituée d'au moins deux ailettes parallèles (2), lesdites ailettes (2) présentant sensiblement la même orientation que la partie principale (1), caractérisée en ce que les ailettes (2) de la grille sont disposées de manière échelonnée dans une direction (O) et conformées de telle manière que par une détermination adéquate de la force ascensionnelle totale de la grille d'aile par unité de longueur de l'envergure (b), la circulation autour de cette grille au point de référence est égale à la circulation autour du profil de la partie principale (1) au point de fixation de la grille, et de telle manière que cette circulation le long de la corde profilée (t) peut être reprise section par section par les ailettes.

2. Aile selon la revendication 1, caractérisée en ce que les ailettes (2) sont exemptes de toute torsion.

3. Aile selon la revendication 2, caractérisée en ce que la grille d'aile dans son ensemble, ou certaines ailettes, peuvent être sorties de la partie principale (1).

4. Aile selon l'une des revendications 2 à 3, caractérisée en ce que la grille d'aile présente un cadre support (4) au moyen duquel les ailettes (2) sont assemblées mutuellement à leurs extrémités libres.

5. Aile selon l'une des revendications 2 à 4, caractérisée en ce que la grille d'aile présente des paramètres de grille déterminés séparément pour chaque ailette, définis au point de référence, concernant au moins la corde profilée (c), l'angle d'incidence (β) et la distance (s) d'échelonnement.

6. Aile selon l'une des revendications 2 à 5, caractérisée en ce que l'angle d'incidence (β) des ailettes (2) dans la grille d'aile peuvent subir des variations communes, quantitativement égales, à partir du point de référence.

7. Aile selon l'une des revendications 2 à 6, caractérisée en ce que l'angle d'incidence des ailettes est variable par la rotation de la grille d'aile dans son ensemble.

8. Aile selon l'une des revendications 2 à 7, caractérisée en ce que par rapport au courant soufflant (v), la flèche des ailettes correspond au même nombre de Mach que celle de la partie principale (1).

9. Aile selon l'une des revendications 2 à 8, caractérisée en ce que l'ailette située le plus en avant, ou respectivement le plus en arrière, dans la grille d'aile, peut être déplacée isolément.

10. Utilisation de l'aile conforme à l'une des revendications 1 à 9 pour la voilure d'un bateau comportant une voile principale (1) dont l'arête supérieure est munie d'une grille de voilure.

A = AUFTRIEB

W = WIDERSTAND

v = ANSTRÖMUNG

$$\text{GLEITZAHL} = tg\,\alpha = \frac{W}{A}$$

FIG. 1

FIG. 2

FIG. 3

FIG. 4

FIG. 5

FIG. 6

FIG. 7

FIG. 8